# EUROPEAN PATENT SPECIFICATION

(11) **EP 0 686 240 B1**
(45) Date of publication and mention of the grant of the patent: **19.11.1997**
(21) Application number: 94908297.8
(22) Date of filing: 25.02.1994
(51) Int. Cl.: F16C 29/06, B63H 9/08

(54) **A TRACK SLIDE**
LINEARFÜHRUNG
COULISSEAU

(30) Priority: 26.02.1993 DK 217/93
(43) Date of publication of application: 13.12.1995
(73) Proprietor: FREDERIKSEN, Gert Hans, DK-7100 Vejle (DK)
(72) Inventor: FREDERIKSEN, Gert Hans, DK-7100 Vejle (DK)
(74) Representative: Jensen, Peter Kim
(86) International application number: DK9400080
(87) International publication number: WO9419615

(56) References cited:
- DE-A- 4 103 434
- DE-A- 4 227 604
- SE-B- 460 353
- US-A- 4 941 197

## Description

### Technical Field

The present invention relates to a track slide intended to be moved along a track, particularly a mast or boom, having a groove with an enlarged inner portion and a narrow slot defined by two opposite walls of the track, said slide comprising a central profiled member having an enlarged inner portion for being received in the enlarged inner portion of the groove and a shaft portion for extending through the slot and a roller member on each side of the central profiled member for coacting with the outer face of the opposite side walls on each side of the groove.

### Background Art

SE published specification No. 460.353 discloses a slide of the above type intended to be moved along a groove of the mast of a sailing boat. The sail slide comprises a shaft portion extending through the slot of the groove and an inner transverse shaft provided with a wheel at each end, said wheel rolling on the inner face of the opposite walls forming the slot. At the outer end portion of the shaft, a second shaft is arranged being provided with a wheel at each end, said wheel intended to roll on the outer face of the said wall portions defining the slot of the groove.

Moreover, DE published specification No. 24 23 173 and FR patent No. 611.838 discloses the use of slides having pairs of rotatably arranged wheels on a shaft and intended to be received in the groove and to roll on the wall portions thereof.

The drawback of known track slides provided with wheels is that it is not always possible to move or roll these along the mast in a sufficiently easy manner, as they tend to jam. Furthermore, they cause a relatively heavy local load on the coacting wall portions.

### Disclosure of the Invention

The object of the invention is to provide a track slide of the type stated in the introduction which is moved very easily along the track with which it coacts.

For obtaining said object the track slide according to the invention is characterised in that each roller member is formed of a plurality of roller bodies arranged to rotate freely in a continuous path in the slide, the path comprising an outwardly open, longitudinal slot allowing said coaction and a return passage. By using roller bodies arranged in a continuous path, a relatively small rolling resistance is obtained, when the slide is subjected to thrust load, even if the slide tilts slightly in relation to the groove. Moreover, the plurality of roller bodies ensures that the load on the wall portions, on which the roller bodies roll, is within an acceptable level.

Preferably, in this connection the central profiled member is provided with a second roller member for coacting with the inner face of the opposite side walls, the second roller member being formed of a plurality of roller bodies arranged to rotate freely in a continuous path having an outwardly open, longitudinal slot and a return passage on each side of the longitudinal mid-plane of the slide. As a result, the slide may also offer a low rolling resistance, when it is subjected to tensile stress, for which reason it is advantageous to use the slide for many purposes, for instance as a traveller car.

Furthermore, the central profiled member may in its shaft portion be provided with a third roller member formed by a plurality of roller bodies arranged to rotate freely in a circumferential continuous path having an outwardly open, longitudinal slot on each side of the shaft portion, the roller bodies therein being intended to roll on one of the edge portions forming the slot of the two adjacent side walls. By this embodiment, a further reduction of the rolling resistance is obtained, as no faces of the slide is in sliding friction with the coacting track.

Moreover, the roller bodies may be formed of balls. This embodiment is presently considered most advantageous, as the rolling resistance of said roller bodies is completely independent of the rolling direction so that an inclined positioning of the slide has thus no influence on ability of the slide to be moved along the track.

Furthermore, in connection with the above embodiment the open slot of each path may have an essentially semi-circular cross-section, whereby an optimum transfer of the forces between the roller bodies and the slot is obtained.

Moreover, when the roller bodies are balls, the slot of each path may have a depth at least slightly larger than half the diameter of the balls and provided with opposite edge portions extending slightly, inwardly to form a slot opening being smaller than the diameter of the balls. As a result, most advantageously the balls are retained in the open slot in such a manner that they do not fall out when the track slide does not coact with the track.

Furthermore, the distance between each of the upper return passage may be less than the distance between the open slots of the path, whereby a more compact and a lower overall height of the track slide is obtained than when the open slot and the return passage is arranged in superposition.

Finally, the two upper return passages may be arranged mutually adjacent, whereby an optimum compactness and minimum height of the track slide is obtained.

### Brief Description of the Drawings

The invention is described in greater detail in the following with reference to the drawing illustrating an embodiment of the invention according to the invention in form of a track slide intended to be moved along the groove of a mast of a sailing boat, and in which
Fig. 1 is a diagrammatic side elevational view of a mast of a sailing boat, along which track slides according to the invention are movably arranged,
Fig. 2 is a sectional view through the mast in the area at its groove and of a track slide according to the invention coacting therewith,
Fig. 3 is a front view of the track slide according to the invention, i.e. in the direction towards the groove of the mast,
Fig. 4 is a view from below of the track slide,
Fig. 5 is a side elevational view of the track slide, and
Fig. 6 is a sectional view through a second embodiment of the track slide according to the invention in engagement with a profiled track of a C-shaped cross-section.

### Best Mode for carrying out the invention

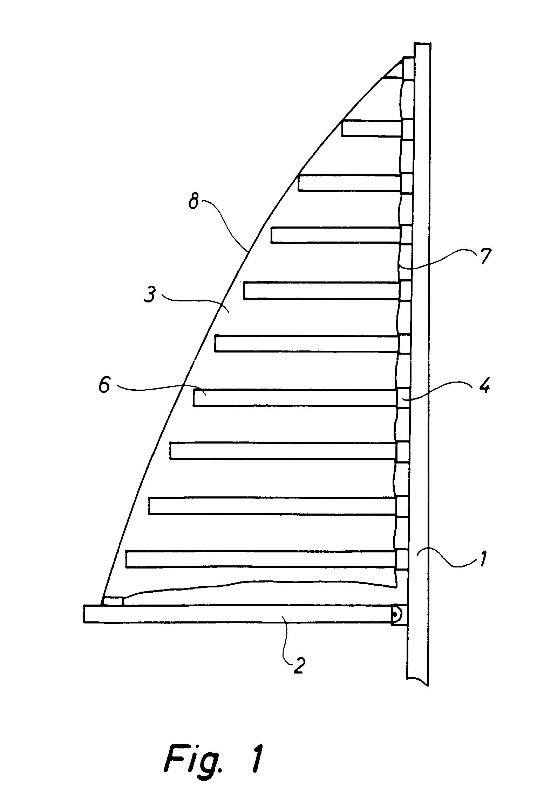

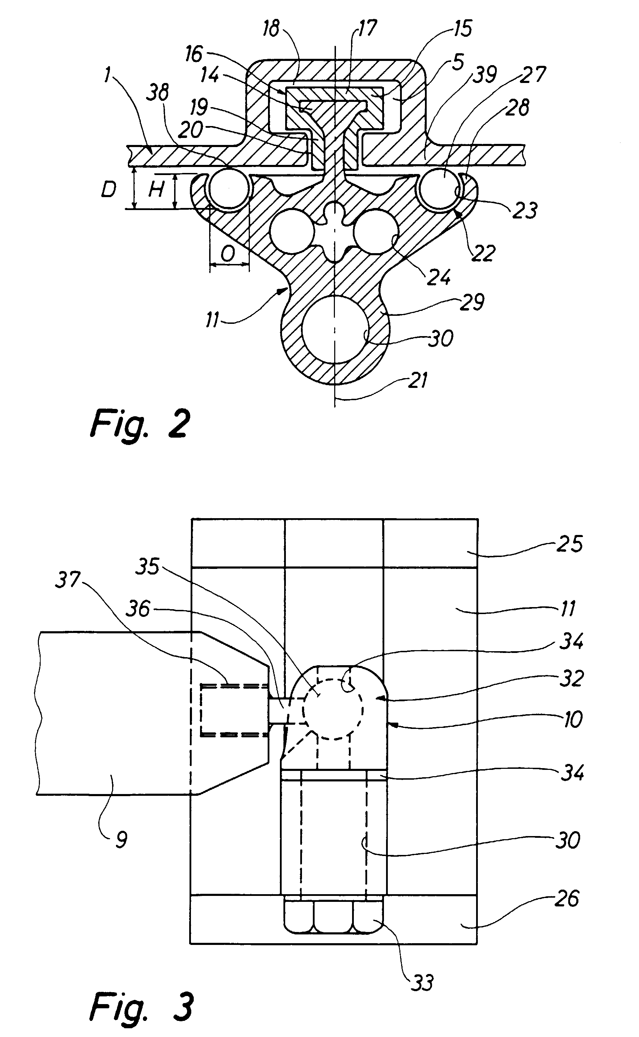

Fig. 1 illustrates a mast 1 with a boom 2 and mainsail 3. The mainsail 3 is attached to the mast 1 by means of a plurality of track slides 4 according to the invention movable along the guideway or groove 5 of the mast 1, as it also appears from Fig. 2. The mainsail 3 is provided with through-going battens 6, i.e battens extending essentially from the luff 7 of the mainsail to the after leech rope 8 thereof. The battens are secured to the sail in a manner known per se and at the luff portion connected to each track slide 4 by means of a batten fitting 9 and a pivot joint 10, wherein pivoting of the batten relative to the slide is permitted, essentially 110° to each side relative to amidships. When using through-going battens 6, the load on the sail is essentially transferred to the mast as thrust load, i.e. the track slides 4 are essentially at any given time subjected to pressure load. As a rule, approximately 80% of the sail load is transferred as thrust load.

As it appears from Figs. 2 - 5, the track slide 4 comprises a slide body 11 of an essentially trapezoidal cross-section with a wide lower face 12 intended to turn towards the groove 5 and a narrow upper face intended to turn away from the groove when the slide 4 coacts therewith. The essentially trapezoidal slide body 11 has furthermore an essentially T-shaped projection 14 extending outwardly from the wide lower face 12. A sleeve 15 is arranged on the essentially T-shaped projection 14, said sleeve having an outer essentially T-shaped outline and being made from a material with a low coefficient of friction, such as a suitable plastics material. The T-shaped projection 14 and the sleeve 15 thus form a T-shaped member 16 having a large head received in the wide inner protion 18 of the groove 5 and a narrow shaft 19 extending through the narrow slot 20 of the groove 5. By means of the T-shaped member 16 of the track slide 4, the slide 4 is prevented from leaving the groove 5.

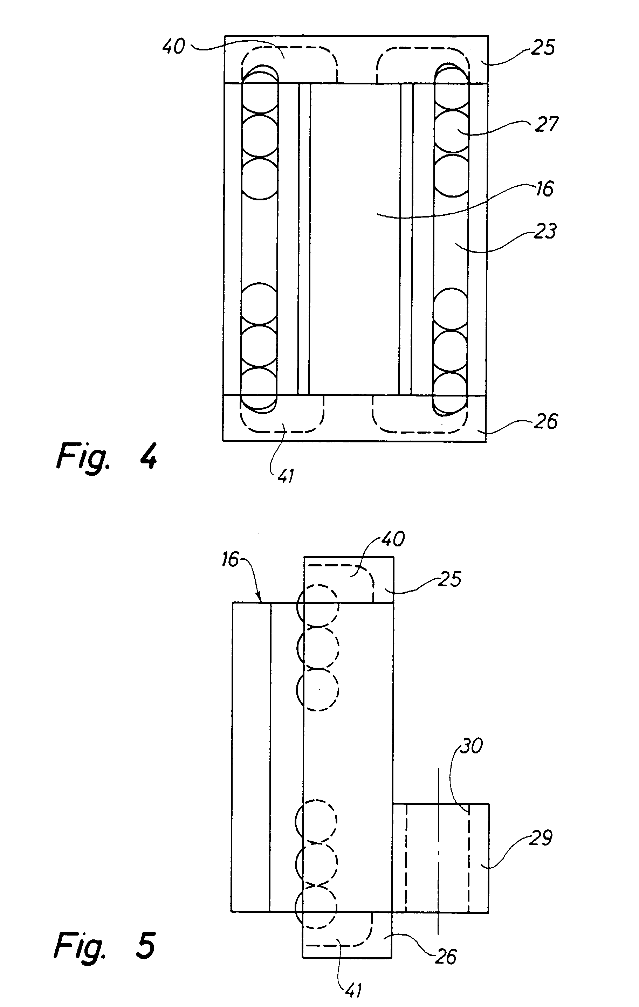

Furthermore, on each side of the longitudinal mid-plane, the slide body is provided with a ball path 22 comprising a slot 23 open towards the lower face 12 of the slide and a closed passage 24. The slot 23 and the passage 24 is interconnected to form the continuous path by means of connecting passages 40,41 in the end covers 25,26 attached to the slide body 11 at each end thereof. The connecting passages 40,41 are indicated by means of dotted lines in Figs. 4 and 5. In each circumferential continuous path a plurality of balls 27 are arranged, which may rotate freely in the path. As it can be clearly seen from Fig. 2, the open slot has an essentially semicircular shape in a cross-sectional view. However, the depth H of the groove is slightly larger than half the diameter of the balls (D ½) and at least one of the edge portions 28 of the slot extends slightly inwards, the opening O of the slot thus being less than the diameter D of the balls, whereby the balls do not fall out, when the track slide is removed from the track with which it is intended to coact.

As it is evident from Fig. 2, the passages 24 are arranged closer to the longitudinal mid-plane of the slide body 11 than the open slots and preferably in close proximity of each other to obtain a low height of the slide 4.

As it furthermore appears from Fig. 2, when the slide 4 is moved along the mast 1, the balls 24 arranged in the open slots 23 roll on the outer face of the opposite wall portions 38,39 on each side of slot 20 of groove 5.

At the narrow upper face 13 the slide body 11 is provided with a bearing housing 29 extending over a portion of the length of the slide body and having a through-going cylindrical bore 30. In its entirety, the slide body 11 is preferably made of extruded aluminium, the extension of the bearing housing 29 being removed by machining. The bearing housing 29 forms part of the previously mentioned pivot joint 10 pivotally connecting the fitting 9 of the batten 6 with the slide 4. The pivot joint 10 comprises, furthermore, a shaft 31 being pivotally received in the bore 30 and having at one end an enlarged head 32 and at the other end a threaded portion, whereon a nut 33 is screwed. Between the enlarged head 32 of the shaft 31 and the bearing housing 29 a disc-shaped ring 34 is provided.

The head of the shaft forms one part of a ball-and-socket universal joint, viz the socket, wherein a freely rotating ball 34 is arranged, one end thereof being attached to a shaft 36, the other end of which having a thread 37 in engagement with a corresponding thread in the batten fitting 9, to which the batten 6 is secured.

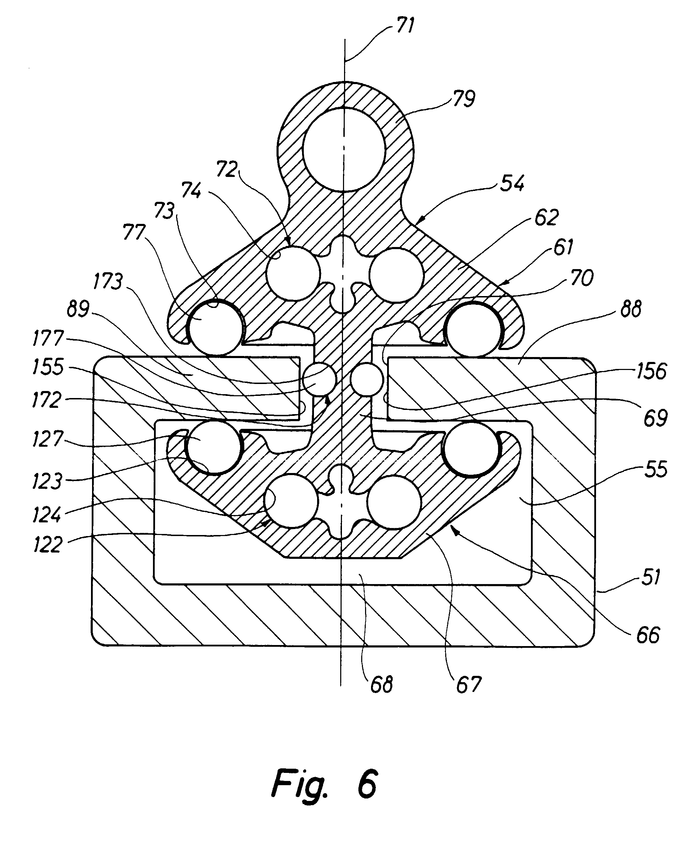

Fig. 6 shows cross-sectional view of a second embodiment of a track slide 54 according to the invention in engagement with a track 51 with a C-shaped cross-section. The track 51 thus forms a groove 55 having a wide inner portion 68 and a narrow slot 70. The track slide 54 and the track 51 may typically be a traveller car and a sheet track. The track slide 54 has a slide body 61 of extruded aluminium and comprises an outer body portion 62 intended to be arranged on the outer side of the track, when the slide is in engagement therewith, and an essentially T-shaped profiled member 66 extending into the groove 55. The T-shaped profiled member 66 comprises a large head 67 received in the wide inner portion 68 of the groove 55 and a narrow shaft 69 extending through the narrow slot 70 of the groove 55.

On each side of the longitudinal mid-plane, the outer body portion 62 of the slide body 61 is provided with a ball path 72 comprising a slot 73 open in the direction towards the track 51 and a closed passage 74. Each slot 73 and relating passage 74 is interconnected by means of connecting passages arranged in the end covers (not shown) attached to the slide body at each end thereof. In each circumferential continuous path 72 a plurality of balls 77 are arranged, which may rotate freely in the path. As described at the above embodiment, the slot is shaped in such manner that the ball cannot fall out. The balls 77 are intended to roll on the outer face of the wall portions 88,89 at the slot 70.

The enlarged head 67 of the slide body has essentially the same shape as the outer body portion 62 of the slide body and is thus, on each side of the longitudinal mid-plane 71 of the slide body, provided with a ball path 122 comprising a slot 123 open in the direction towards the outer slide body portion 62 and a closed passage 124. In a manner as described above, a plurality of balls 127, which may rotate freely, is arranged in the paths. The balls 127 in the longitudinal open slots 123 are in engagement with the inner face of the opposite wall portions 88,89 at the slot 70.

Moreover, a circumferential continuous path 152 is arranged in the narrow shaft 69 of the slide body 61, said path comprising an outwardly longitudinal open slot 171 in each side of the shaft 69. For the formation of the path the slots 173 are interconnected by means of connecting passages in each of end covers (not shown). In the ball path 172 a plurality of balls 177 is arranged intended to roll on one of two edge portions 155,156 forming the slot 70.

Finally, on the upper face of the outer body portion 62, the slide body 61 is provided with an eye 79 at each end to receive a shaft (not shown), whereto a shackle or a block may be secured.

The shape of the upper end of the outer body portion 62 is dependent on the purpose of the slide and may thus be designed in many various ways.

The invention may be modified in many way without thereby deviating from the scope of the invention as defined by the claims. Instead of roller bodies in form of balls, rollers may thus be used.

## Claims

1. A track slide (4;54) intended to be moved along a track, particularly a mast or boom, having a groove (5;55) with an enlarged inner portion (18;58) and a narrow slot (20;70) defined by two opposite walls (38,39;88,89) of the track, said slide (4,54) comprising a central profiled member (16;66) having an enlarged inner portion (17,67) for being received in the enlarged inner portion (18;68) of the groove (5;55) and a shaft portion (19;69) for extending through the slot (20;70), and a roller member on each side of the central profiled member (16;66) for coacting with the outer face of the opposite side walls (38,39;88,89) on each side of the groove, **characterised** in that each roller member is formed of a plurality of roller bodies (27;77) arranged to rotate freely in a continuous path (22;72) in the slide, the path comprising an outwardly open, longitudinal slot (23;73) allowing said coaction and a return passage (24,74).

2. A track slide (54) as claimed in claim 1, wherein the central profiled member (66) is provided with a second roller member for coacting with the inner face of the opposite side walls (88,89), **characterised** in that the second roller member is formed of a plurality of roller bodies (127) arranged to rotate freely in a continuous path (122) having an outwardly open, longitudinal slot (123) and a return passage (124) on each side of the longitudinal mid-plane (71) of the slide (54).

3. A slide as claimed in claim 1 or 2, **characterised** in that the central profiled member (66) in its shaft portion (69) is provided with a third roller member formed by a plurality of roller bodies (177) arranged to rotate freely in a circumferential continuous path (172) having an outwardly open, longitudinal slot (173) on each side of the shaft portion (6), the roller bodies therein (177) being intended to roll on one of the edge portions (156, 155) forming the slot (70) of the two adjacent side walls (88,89).

4. A slide as claimed in one or more of the preceding claims, **characterised** in that the roller bodies are formed of balls (27;77;127;177).

5. A slide as claimed in claim 4, **characterised** in that the slot (23;73;123;173) of each path (22;72;122;172) has an essentially semicircular cross-section.

6. A slide as claimed in claim 4 or 5, **characterised** in that the slot (23;73;123;173)of each path (22;72;122;172)has a depth (H) at least slightly larger than half the diameter (D ½) of the balls (27;77;127;177) and provided with opposite edge portions (28) extending slightly inwardly to form a slot opening (O) being smaller than the diameter (D) of the balls.

7. A slide as claimed in one or more of the preceding claims, **characterised** in that the distance between the upper return passages (24;74;124) is less than the distance between the open slots (23;73;123) of the paths (22;72; 122).

8. A slide as claimed in one or more of the preceding claims, **characterised** in that the two upper return passages (24; 74;124) are arranged mutually adjacent.

## Patentansprüche

1. Führungsschlitten (4; 54) zur Bewegung längs einer Führung, insbesondere einer Führung längs eines Mastes oder eines Großbaums, welche Führung eine Nut (5,; 55) mit einem vergrößerten inneren Abschnitt (18; 58) und einem schmalen Schlitz (20; 70) aufweist, der durch zwei gegenüberliegende Wände (38, 39; 88, 89) der Führung definiert ist, wobei der Schlitten (4, 54) einen zentralen Profilkörper (16; 66) mit einem vergrößerten inneren Abschnitt (17, 67), der von einem vergrößerten inneren Abschnitt (18; 68) der Nut (5; 55) aufgenommen wird und einen Schaftabschnitt (19; 69) aufweist, der sich über den Schlitz (20; 70) erstreckt, und wobei Rollkörper auf jeder Seite des zentralen Profilkörpers (16; 66) angeordnet sind, um mit der Außenseite der gegenüberliegenden Seitenwände (38, 39; 88, 89) auf jeder Seite der Nut zusammenzuwirken,
dadurch gekennzeichnet, daß jeder Rollkörper von mehreren Rollgliedern (27; 77) gebildet ist, die so angeordnet sind, daß sie sich frei in einem kontinuierlichen Pfad (22; 72) in dem Schlitten drehen können, wobei der Pfad einen nach außen offenen, in Längsrichtung verlaufenden, dieses Zusammenwirken ermöglichenden Schlitz (23; 73) und einen Rückführungskanal (24, 74) aufweist.

2. Führungsschlitten (54) nach Anspruch 1, bei dem der zentrale Profilkörper (66) mit einem zweiten Rollkörper versehen ist, der mit der Innenfläche der gegenüberliegenden Seitenwände (88, 89) zusammenwirkt,
dadurch gekennzeichnet, daß der zweite Rollkörper von mehreren Rollgliedern (127) gebildet ist, die frei in einem kontinuierlichen Pfad (122) drehbar sind, der einen nach außen offenen Längsschlitz (123) und einen Rückführungskanal (124) auf jeder Seite der Längsmittelebene (71) des Schlittens (54) aufweist.

3. Schlitten nach den Ansprüchen 1 oder 2,
dadurch gekennzeichnet, daß der zentrale Profilkörper (66) in seinem Schaftabschnitt (69) mit einem dritten Rollkörper ausgestattet ist, der aus mehreren Rollgliedern (177) besteht, die frei in einem in Umfangsrichtung kontinuierlichen Pfad (172) drehbar sind, der einen nach außen offenen Längsschlitz (173) auf jeder Seite des Schaftabschnitts (69) aufweist, wobei die Rollglieder (177) darin bestimmungsgemäß auf einem der Randabschnitte (156, 155) ablaufen, die den Schlitz (70) von zwei benachbarten Seitenwänden (88, 89) bilden.

4. Schlitten nach einem oder mehreren der vorhergehenden Ansprüche,
dadurch gekennzeichnet, daß die Rollglieder von Kugeln (27; 77; 127; 177) gebildet sind.

5. Schlitten nach Anspruch 4,
dadurch gekennzeichnet, daß der Schlitz (23; 73; 123; 173) eines jeden Pfades (22; 72; 122; 172) einen im wesentlichen halbkreisförmigen Querschnitt besitzt.

6. Schlitten nach Anspruch 4 oder 5,
dadurch gekennzeichnet, daß der Schlitz (23; 73; 123; 173) eines jeden Pfades (22; 72; 122; 172) eine Tiefe (H) besitzt, die wenigstens etwas größer ist als der halbe Durchmesser (D 1/2) der Kugeln (27; 77; 127; 177) und jeder Pfad gegenüberliegende Randabschnitte (28) aufweist, die etwas nach innen gezogen sind, um eine Schlitzöffnung (O) zu bilden, die kleiner ist als der Durchmesser (D) der Kugeln.

7. Schlitten nach einem oder mehreren der vorhergehenden Ansprüche,
dadurch gekennzeichnet, daß der Abstand zwischen den oberen Rückführungskanälen (24; 74; 124) kleiner ist als der Abstand zwischen den offenen Schlitzen (23; 73; 123) der Pfade (22; 72; 122).

8. Schlitten nach einem oder mehreren der vorhergehenden Ansprüche,
dadurch gekennzeichnet, daß die beiden oberen Rückführungskanäle (24; 74; 124) benachbart zueinander angeordnet sind.

## Revendications

1. Coulisseau (4 ; 54) devant être déplacé le long d'un rail, en particulier un mât ou un gui, qui possède une gorge (5 ; 55) comportant une partie intérieure agrandie (18 ; 58) et une fente étroite (20 ; 70) définie par deux parois opposées (38, 39 ; 88, 89) du rail, ledit coulisseau (4 ; 54) comprenant un élément profilé central (16 ; 66) qui possède une partie intérieure agrandie (17 ; 67) prévue pour être reçue dans la partie intérieure centrale (18 ; 68) de la gorge (5 ; 55), une partie formant tronc (19 ; 69) prévue pour s'étendre à travers la fente (20 ; 70), et, de chaque côté de l'élément profilé central (16 ; 66), un élément formant rouleau prévu pour coopérer avec la face extérieure des parois latérales opposées (38, 39 ; 88, 89) qui se trouvent de chaque côté de la gorge, caractérisé en ce que chaque élément formant rouleau est formé d'une pluralité de corps de rouleau (27 ; 77) disposés de manière à tourner librement dans un chemin continu (22 ; 72) aménagé dans le coulisseau, le chemin comprenant une ouverture dirigée vers l'extérieur, une fente longitudinale (23 ; 73) permettant ladite coopération et un passage de retour.

2. Coulisseau (54) selon la revendication 1, dans lequel l'élément profilé central (66) est muni d'un deuxième élément formant rouleau, prévu pour coopérer avec la face intérieure des parois latérales opposées (88, 89), caractérisé en ce que le deuxième élément formant rouleau est formé d'une pluralité de corps de rouleau (127) disposés de manière à tourner librement dans un chemin continu (122) qui possède une ouverture dirigée vers l'extérieur, une fente longitudinale (123) et un passage de retour (124), de chaque côté du plan médian longitudinal (71) du coulisseau (54).

3. Coulisseau selon les revendications 1 ou 2, caractérisé en ce que l'élément profilé central (66) est muni, dans sa partie formant tronc (69), d'un troisième élément formant rouleau formé par une pluralité de corps de rouleau (177) disposés de manière à tourner librement dans un chemin continu circulaire (172) qui possède, de chaque côté de la partie formant tronc (6), une ouverture dirigée vers l'extérieur et une fente longitudinale (173), les corps de rouleau (177) qui s'y trouvent étant conçus pour rouler sur une des parties de bords (156, 155) des deux parois latérales adjacentes (88, 89) formant la fente (70).

4. Coulisseau selon une ou plusieurs des revendications précédentes, caractérisé en ce que les corps de rouleau sont formés de billes (27 ; 77 ; 127 ; 177).

5. Coulisseau selon la revendication 4, caractérisé en ce que la fente (23 ; 73 ; 123 ; 173) de chaque chemin (22 ; 72 ; 122 ; 172) a une section transversale essentiellement semi-circulaire.

6. Coulisseau selon les revendications 4 ou 5, caractérisé en ce que la fente (23 ; 73 ; 123 ; 173) de chaque chemin (22 ; 72 ; 122 ; 172) a une profondeur (H) au moins légèrement plus grande que la moitié du diamètre (D ½) des billes (27 ; 77 ; 127 ; 177) et est munie de parties de bords opposées (28) qui s'étendent légèrement vers l'intérieur de manière à former une ouverture de fente (O) plus petite que le diamètre (D) des billes.

7. Coulisseau selon une ou plusieurs des revendications précédentes, caractérisé en ce que la distance entre les passages de retour supérieurs (24 ; 74 ; 124) est inférieure à la distance entre les fentes d'ouverture (23 ; 73 ; 123) des chemins (22 ; 72 ; 122).

8. Coulisseau selon une ou plusieurs des revendications précédentes, caractérisé en ce que les deux passages de retour supérieurs (24 ; 74 ; 124) sont disposés au voisinage immédiat l'un de l'autre.
